# EUROPEAN PATENT SPECIFICATION

(11) **EP 0 472 948 B1**
(45) Date of publication and mention of the grant of the patent: **02.11.1995**
(21) Application number: 91112976.5
(22) Date of filing: 01.08.1991
(51) Int. Cl.: C03B 33/10

(54) **Toolhead for a sheet glass cutting machine**
Werkzeugkopf für eine Glasschneidemaschine
Tête d'outil pour machine de découpe de verre

(30) Priority: 07.08.1990 IT 6762390
(43) Date of publication of application: 04.03.1992
(73) Proprietor: BOTTERO S.p.A., I-12010 Cuneo (IT)
(72) Inventor: Bergia, Alessandro, I-12023 Caraglio (IT)
(74) Representative: Boggio, Luigi

(56) References cited:
- EP-A- 0 033 267
- DE-A- 2 736 614
- DE-U- 7 711 292
- FR-A- 2 333 757
- FR-A- 2 460 898
- US-A- 2 556 757

## Description

The present invention relates to a toolhead for a sheet glass cutting machine, designed to support a glass cutting wheel, of the type defined in the preamble of claim 1.

Known toolheads of the aforementioned type are fitted on a slide traveling in relation to the machine frame, and normally comprise a pneumatic cylinder having a housing secured to the slide and housing an axially-mobile piston, the rod of which is fitted with the cutting wheel.

Toolheads of this type present a number of drawbacks.

Firstly, as it moves over the surface of the sheet, the cutting wheel on the toolhead also moves relatively slowly in the direction of the axis of the piston rod to which it is fitted, so that it adapts poorly, and invariably with a certain amount of delay, to any surface imperfections on the sheet. The slow overall response time of the toolhead therefore has a negative effect on the output of the machine, and is mainly due to the strong damping effect of the piston as it slides inside the housing, and in turn caused by severe friction between the piston and the inner surface of the housing.

Secondly, in the case of minor surface imperfections on the sheet, the toolhead does not allow a sufficiently small amount of travel of the cutting wheel to ensure permanent contact with the surface of the sheet under all working conditions, thus resulting in an uneven cutting line.

Finally, toolheads of the aforementioned type are unsuitable for machines requiring rotation of the cutting wheel about a vertical axis, for effecting cuts of any shape. In fact, rotation of the piston rod supporting the cutting wheel results in severe resisting torques due to friction between the piston and the inner surface of the cylinder housing.

A few problems aforementioned are solved by toolhead described in DE-U-7 711 292. In particular, DE-U-7 711 292 discloses a toolhead in which a body supports a cutting wheel, and can rotate about a vertical axis with respect a proper support element.

Furthermore, US 2, 556, 757 discloses a fixed toolhead for a sheet glass forming machine; the fixed toolhead presents a body, a rod which is axially moving with respect to the body, a cutting wheel fitted on a first end portion of said rod, a substantially plain membrane which present a proper edge fixed to the body and a proper central portion secured to a second end portion of the rod; the membrane defining, with a cavity of the body, a chamber connectable to a pressurised fluid source.

In the above fixed toolhead, the particular flat shape of the membrane limits the axially stroke of the cutting wheel with respect to said body.

It is an object of the present invention to provide a toolhead for a sheet glass cutting machine of the type briefly described above, designed to overcome the aforementioned drawbacks.

According to the present invention, there is provided a toolhead for a sheet glass cutting machine, as defined in claim 1.

Two non-limiting embodiments of the present invention will be described by way of example with reference to the accompanying drawings, in which:
Fig.1 shows a schematic top plan view of a sheet glass cutting machine fittable with the toolhead according to the present invention;
Fig.2 shows a section along line II-II of the Fig.1 machine, showing the machine slide to which the toolhead is fitted;
Fig.s 3 and 4 show vertical sections of two embodiments of the toolhead according to the present invention.

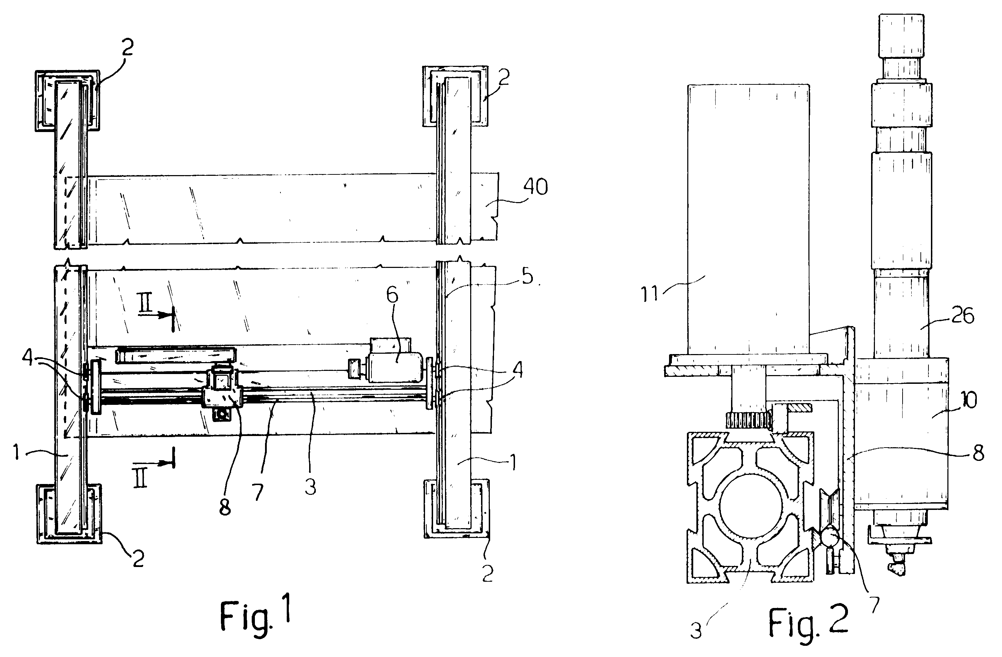

The toolhead according to the present invention is fittable to machines of the type shown in Fig.1, which substantially comprises two side members 1 supported on respective uprights 2 and along which travels a cross member 3. Cross member 3 is normally fitted on the ends with wheels 4 running along guides 5 on side members 1 and driven by an electric motor 6 on cross member 3.

A slide 8, to which the toolhead 10 according to the present invention is fitted, is driven along guides 7 on cross member 3 (Fig.s 1 and 2) by an electric motor 11.

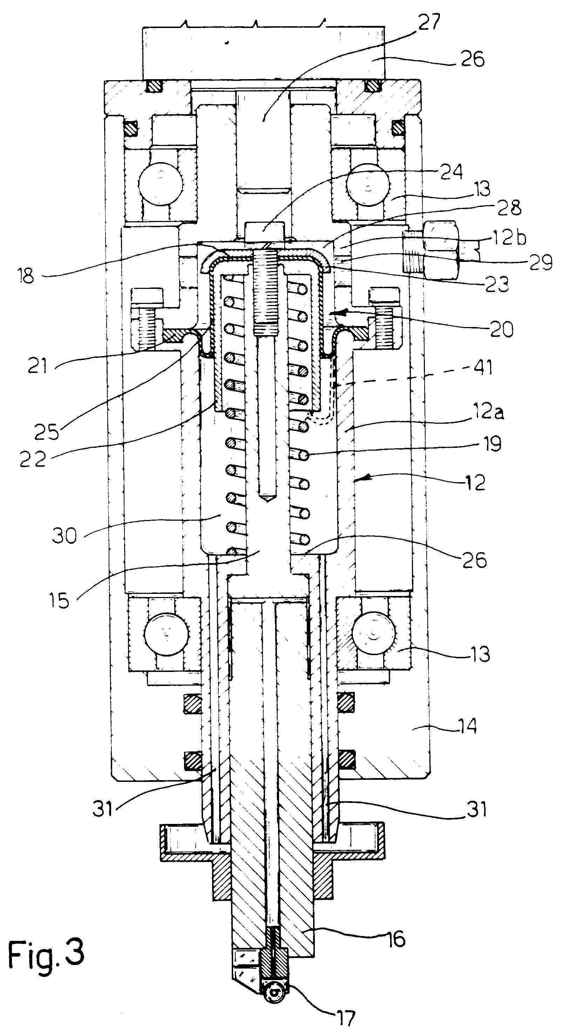

The Fig.3 embodiment of toolhead 10 substantially comprises an elongated body 12 fitted by means of a pair of rolling bearings 13 to a housing 14 constituting the housing of toolhead 10 and secured to slide 8 on the machine (Fig.2). Toolhead 10 comprises a rod 15 moving axially in relation to body 12 and fitted, on the bottom end 16, with a cutting wheel 17, and, on the top end, with the central portion 18 of a deformable membrane 20.

The edge 21 of membrane 20 is secured to body 12, for which purpose, body 12 consists of two portions 12a and 12b having flange-shaped end portions for gripping edge 21 as shown in Fig.3. Central portion 18 of membrane 20 is secured to the top end of rod 15 by means of a cup-shaped element 22 and a disk 23, between which central portion 18 is gripped and secured to rod 15 by a screw 24.

A helical spring 19 is inserted between a shoulder 26 on body 12 and cup-shaped element 22, to keep rod 15 in the top limit position shown in Fig.3.

Deformable membrane 20, which may be made of any type of deformable material, e.g. rubber, elastomer or plastic, is secured to portions 12a and 12b of body 12 in such a position as to form a sleeve-shaped portion 25 over the surface of cup-shaped element 22, when rod 15 is in the top limit position shown in Fig.3. The axial length of sleeve-shaped portion 25 is so selected that displacement of rod 15 between the top limit position in Fig.3 and the bottom limit position (in which the cutting wheel contacts the sheet) is as required for moving the cutting wheel from the idle to the operating position, and enabling the cutting wheel to move in relation to the sheet in response to any surface imperfections on the same.

In the Fig.3 embodiment, body 12 is fitted to housing 14 so as to rotate about a vertical axis, which rotation is controlled by an electric motor 26 (or a motor and reduction gear unit) having a shaft 27 connected to body 12. A toolhead of this type therefore provides for making straightline cuts in any plane on the surface of the sheet, or curved cuts, in which case, as the toolhead travels over the sheet, body 12 and rod 15 are rotated to achieve the required curvature.

Together with cavities on body 12, deformable membrane 20 defines a chamber 28 connectable, e.g. by means of a hole 29, to a compressed air source (not shown).

The chamber 30 formed by membrane 20 and the cavity inside portion 12a of body 12 communicates externally via ducts 31.

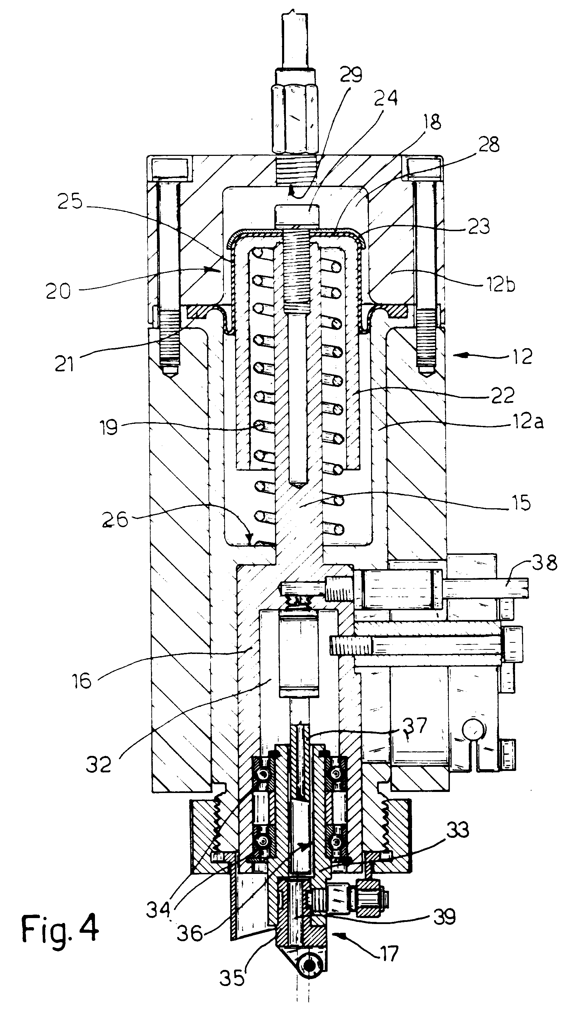

The Fig.4 embodiment differs from that of Fig.3 in that portions 12a and 12b of body 12 are connected directly and therefore fixed in relation to slide 8 on the machine (Fig.2). Also, the bottom end of rod 15, moving axially in relation to body 12, presents a seat 32 housing a rotary support 33 fitted with cutting wheel 17. As shown in Fig.4, support 33 is fitted to rod 15 by means of a pair of rolling bearings 34, and cutting wheel 17 is mounted for rotation on a shank 35, the longitudinal axis of which is offset in relation to the rotation axis of cutting wheel 17.

Support 33 presents an axial hole 36 in which is inserted a tube 37 for feeding cutting oil from a conduit 38 to cutting wheel 17 along a hole 39 formed in shank 35.

The toolhead according to the present invention operates as follows.

When idle, rod 15 is kept in the top limit position (Fig.3) by helical spring 19, and sleeve-shaped portion 25 of membrane 20 is arranged over cup-shaped element 20, thus reducing the volume of chamber 28.

For bringing cutting wheel 17 into contact with the upper surface of sheet 40 (Fig.1), compressed air is fed through hole 29 into chamber 28 so as to lower rod 15.

Due to the substantially bell-shaped configuration assumed by deformable membrane 20, when rod 15 moves into the bottom limit position wherein cup-shaped element 22 contacts shoulder 26, deformable membrane 20 forms a further sleeve-shaped portion 41 substantially resting on the inner surface of chamber 30 and as shown by the dotted line in Fig.3.

Rod 15 is thus permitted a considerable amount of travel, which is more than enough for enabling cutting wheel 17, not only to move from the idle to the operating position, but also to adhere closely to the surface of sheet 40 even in the presence of major surface imperfections on the same. During the cutting operation, performed by moving slide 8 and cross member 3, cutting wheel 17 is maintained contacting the surface of sheet 40, even in the presence of major surface imperfections on the same, due to the small amount of pressure required for moving rod 15. Moreover, as displacement of rod 15 involves no sliding friction, but only a very small amount of deformation of membrane 20, the resulting cutting line is extremely even.

Moreover, vertical displacement of rod 15, for enabling cutting wheel 17 to adhere closely to the surface of sheet 40, is extremely rapid, due to the absence of any damping effect caused by sliding friction, and elastic, by virtue of depending on the deformability of the volume of air in chamber 28, thus providing for extremely rapid response of the toolhead.

Both embodiments of the toolhead described herein may be used for making cuts of any shape. In the case of the Fig.3 embodiment, for cutting a predetermined curve, the toolhead is rotated about the vertical axis by rotating rod 15 about its vertical axis. In the case of the Fig.4 embodiment, cutting wheel 17 is rotated about the vertical axis together with support 33, by virtue of the rotation axis of cutting wheel 17 being offset in relation to that of support 33.

To those skilled in the art it will be clear that changes may be made to the design and arrangement of the component parts of the toolhead as described herein without, however, departing from the scope of the present invention as defined in the claims.

## Claims

1. A toolhead for a sheet glass cutting machine, said toolhead supporting a cutting wheel (17) and being secured to a slide (8) traveling in relation to the machine frame; the toolhead comprising a body (12) supported on said slide (8), a rod (15) moving axially in relation to said body (12) and the bottom end (16) of which is fitted with said cutting wheel (17), and a deformable membrane (20) which presents an edge (21) secured to said body (12) and a central portion (18) secured to the top end of said rod (15); said membrane (20) defining, with a cavity of said body (12), a chamber (28) connectable to a pressurised fluid source for deforming said membrane (20), bringing said cutting wheel (17) into contact with the surface of said sheet, and exerting a predetermined pressure on the same, characterised by the fact that the edge (21) of said membrane (20) is secured to said body (12) so that said membrane (20) forms a sleeve-shaped portion (25) about the upper portion of said rod (15) when said rod (15) is in the top limit position.

2. A toolhead as claimed in Claim 1, characterised by the fact that said rod (15) is subjected to the pressure produced by a spring (19) designed to move said rod (15) in the opposite direction to that produced by feeding said compressed fluid into said chamber (28).

3. A toolhead as claimed in Claim 1 or 2, characterised by the fact that said central portion (18) of said membrane (20) is secured to the end of said rod (15) by means of a cup-shaped element (22) and a disk (23) between which said central portion (18) is gripped.

4. A toolhead as claimed in one of the foregoing Claims, characterised by the fact that the length of said sleeve-shaped portion (25) is such that displacement of said rod (15), between said top limit position and the bottom limit position wherein said cutting wheel (17) contacts said sheet, is sufficient for enabling said cutting wheel (17) to move from the idle to the operating position, and to move in relation to said sheet when cutting the same.

5. A toolhead as claimed in one of the foregoing Claims, characterised by the fact that said body (12) is mounted for rotation about a vertical axis on a housing (14) secured to said slide (8).

6. A toolhead as claimed in Claim 5, characterised by the fact that it comprises an actuator (26) connected to said body (12) and controlling rotation of said rod (15) about said vertical axis.

7. A toolhead as claimed in one of the foregoing Claims from 1 to 6, characterised by the fact that said cutting wheel (17) is fitted to a support (33) mounted for rotation in relation to said rod (15).

## Patentansprüche

1. Werkzeugkopf für eine Glasschneidevorrichtung für Platten, der ein Schneidrad (17) hält und an einem in bezug auf den Rahmen der Vorrichtung verschiebbaren Schlitten (8) angebracht ist, wobei der Werkzeugkopf ein durch den Schlitten (8) gehaltenes Rumpfteil (12), eine Stange (15), die axial in bezug auf das Rumpfteil (12) bewegbar ist und deren unteres Ende (16) mit dem Schneidrad (17) verbunden ist, und eine verformbare Membran (20) aufweist, die über einen an dem Rumpfteil (12) angebrachten Rand (21) und einen an dem oberen Ende der Stange (15) angebrachten Mittenbereich (18) verfügt, wobei die Membran (20) mit einem Hohlraum des Rumpfteiles (12) zum Verformen der Membran (20) eine mit einer Quelle eines unter Druck stehenden Fluides verbindbare Kammer (28) bildet, die das Schneidrad (17) in Kontakt mit der Oberfläche der Platte bei Ausüben eines vorbestimmten Druckes auf diese in Kontakt bringt, **dadurch gekennzeichnet**, daß der Rand (21) der Membran (20) an dem Rumpfteil (12) derart angebracht ist, daß die Membran (20) in der oberen Endstellung der Stange (15) einen hülsenartig geformten Abschnitt (25) um den oberen Abschnitt der Stange (15) bildet.

2. Werkzeugkopf nach Anspruch 1, dadurch gekennzeichnet, daß die Stange (15) dem Druck einer Feder (19) unterworfen ist, die zum Bewegen der Stange (15) in der bezüglich bei Einspeisen des komprimierten Fluides in die Kammer (28) entgegengesetzten Richtung ausgelegt ist.

3. Werkzeugkopf nach Anspruch 1 oder 2, dadurch gekennzeichnet, daß der Mittenbereich (18) der Membran (20) mittels eines kappenartig ausgebildeten Elementes (22) und einer Scheibe (23), zwischen die der Mittenbereich (18) eingeklemmt ist, an dem Ende der Stange (15) angebracht ist.

4. Werkzeugkopf nach einem der vorangehenden Ansprüche, dadurch gekennzeichnet, daß die Länge des hülsenartig ausgebildeten Abschnittes (25) derart eingerichtet ist, daß die Verschiebung der Stange (15) zwischen der oberen Endposition und der unteren Endposition, in der das Schneidrad (17) die Glasplatte berührt, ausreichend ist, um das Schneidrad (17) von der Ruhe- in die Betriebsstellung zu bringen und in bezug auf die Platte bei Schneiden derselben zu bewegen.

5. Werkzeugkopf nach einem der vorangehenden Ansprüche, dadurch gekennzeichnet, daß das Rumpfteil (12) zur Drehung um eine vertikale Achse in einem an dem Schlitten (8) angebrachten Gehäuse (14) befestigt ist.

6. Werkzeugkopf nach Anspruch 5, dadurch gekennzeichnet, daß ein mit dem Rumpfteil (12) in Verbindung stehendes und die Drehung der Stange (15) um die vertikale Achse steuerndes Antriebsmittel (26) vorgesehen ist.

7. Werkzeugkopf nach einem der vorangehenden Ansprüche 1 bis 6, dadurch gekennzeichnet, daß das Schneidrad (17) an einem zur Drehung in bezug auf die Stange (15) angebrachten Halter (33) befestigt ist.

## Revendications

1. Tête d'outil pour une machine de découpe de feuille de verre, ladite tête d'outil supportant une roulette de découpe (17) et étant fixée à un coulisseau (8) se déplacant par rapport au cadre de la machine ; la tête d'outil comprenant un corps (12) supporté sur ledit coulisseau (8), une tige (15) se déplacant axialement par rapport audit corps (12) et dont l'extrémité inférieure (16) est pourvue de ladite roulette de découpe (17), et une membrane déformable (20) qui présente un bord (21) fixé audit corps (12) et une portion centrale (18) fixée à l'extrémité supérieure de ladite tige (15) ; ladite membrane (20) définissant, avec une cavité dudit corps (12), une chambre (28) susceptible d'être reliée à une source de fluide sous pression pour déformer ladite membrane (20), amenant ladite roulette de découpe (17) en contact avec la surface de ladite feuille, et exerçant une pression prédéterminée sur celle-ci, caractérisée en ce que le bord (21) de ladite membrane (20) est fixée audit corps (12) de manière que ladite membrane (20) forme une portion en forme de manchon (25) autour de la portion supérieure de ladite tige (15) lorsque ladite tige (15) est dans la position limite supérieure.

2. Tête d'outil selon la revendication 1, caractérisée en ce que ladite tige (15) est soumise à une pression produite par un ressort (19) destiné à déplacer ladite tige (15) dans la direction opposée à celle produite par l'alimentation en fluide comprimé dans ladite chambre (28).

3. Tête d'outil selon la revendication 1 ou 2, caractérisée en ce que ladite portion centrale (18) de ladite membrane (20) est fixée à l'extrémité de ladite tige (15) au moyen d'un élément en forme de godet (22) et un disque (23) entre lesquels ladite portion centrale (18) est serrée.

4. Tête d'outil selon l'une quelconque des revendications précédentes, caractérisée en ce que la longueur de ladite portion en forme de manchon (25) est telle que le déplacement de la tige (15) entre ladite position limite supérieure et ladite position limite inférieure, dans laquelle la roulette de découpe (17) est en contact avec ladite feuille, est suffisante pour permettre à ladite roulette de découpe (17) de se déplacer de la position de repos vers la position de marche, et de se déplacer par rapport à ladite feuille lorsqu'elle découpe cette dernière.

5. Tête d'outil selon l'une quelconque des revendications précédentes, caractérisée en ce que ledit corps (12) est monté, pour tourner autour d'un axe vertical, sur un bâti (14) fixé audit coulisseau (8).

6. Tête d'outil selon l'une quelconque des revendications précédentes, caractérisée en ce qu'elle comprend un dispositif de commande (26) relié audit corps (12) et commandant la rotation de ladite tige (15) par rapport audit axe vertical.

7. Tête d'outil selon l'une quelconque des revendications précédentes, caractérisée en ce que la roulette de découpe (17) est fixée à un support (33) monté pour tourner par rapport à ladite tige (15).
